# EUROPÄISCHE PATENTANMELDUNG

(11) **EP 1 265 138 A1**
(43) Veröffentlichungstag der Anmeldung: **11.12.2002**
(21) Anmeldenummer: 01810549.4
(22) Anmeldetag: 07.06.2001
(51) Int. Cl.: G06F 9/46

(54) **Verfahren zum Auffinden von Objekten in einem Netzwerk und Objektverwaltungssystem**

(71) Anmelder: ABB RESEARCH LTD., 8050 Zürich (CH)
(72) Erfinder: Naedele, Martin, 8048 Zürich (CH); Holle, Jörg, 5405 Baden-Dättwil (CH)
(74) Vertreter: ABB Patent Attorneys

(57) **Zusammenfassung**

Die Erfindung ist gerichtet auf ein Verfahren zum Auffinden von Objekten in einem Netzwerk mit einer Mehrzahl von Objekt-Servern (2, 6), die bei einer Referenz-Instanz (4) angemeldet sind, die Informationen zu vorgegebenen Kriterien über die bei ihr angemeldeten Objekt-Server (2, 6) verwaltet, mit folgenden Schritten: Absenden einer Objekt-Anfrage durch einen Klienten (3) an einen ersten Objekt-Server (2), wobei die Anfrage ein Set von Suchkriterien zur Bestimmung geeigneter Objekte aufweist; Durchsuchen des ersten Objekt-Servers (2) nach zumindest einem ersten Teil der Suchkriterien genügenden Objekten und/oder im Falle des Nichtfindens eines Objekts auf dem ersten Objekt-Server (2); Durchsuchen der Referenz-Instanz (4) nach weiteren, zumindest einem zweiten Teil der Suchkriterien genügenden Objekt-Servern (6) und Durchsuchen der so aufgefundenen Objekt-Server (6) nach zumindest dem ersten Teil der Suchkriterien genügenden Objekten; und, falls zumindest ein den Suchkriterien genügendes Objekt auf einem der Objekt-Server (2, 6) gefunden worden ist: Zurücksenden von Lokalisierungsinformationen für die gefundenen Objekte an den Klienten (3).

## Beschreibung

### Technisches Gebiet der Erfindung

Die vorliegende Erfindung betrifft ein Verfahren zum Auffinden von Objekten, insbesondere Softwareobjekten wie Softwarebündeln in einem Netzwerk von Objektservern sowie ein Objektverwaltungssystem, das dem Auffinden solcher Objekte dient.

### Stand der Technik

Eine häufige Aufgabe von Softwareentwicklern und Anwendern gleichermaßen ist das Auffinden von Datenobjekten, im weitesten Sinne zu verstehen als Softwareobjekte oder reine Datenobjekte, wie Texte oder Graphiken aus Softwarekollektionen. Im Stand der Technik sind im wesentlichen zwei Arten der Recherche nach solchen Objekten bekannt, nämlich zum einen die unmittelbare Suche in Systemen mit Softwarekollektionen oder -sammlungen und zum anderen die Verwendung WWW-basierter (WWW: World wide web, http-Protokoll Dienst des Internet) Suchmaschinen. Die existierenden Kollektionen an Software oder sonstigen Objekten unterscheiden sich teilweise sehr stark voneinander. Einige von ihnen sind zu weitgehend mit bestimmten Entwicklungs-Umgebungen verbunden, um einen allgemeinen Nutzen zu haben, beispielsweise die Sammlung Team-Connection der Firma IBM. Üblicherweise basieren viele Systeme auf einem Zentralserverkonzept und gestatten nicht, in einer Mehrzahl von Servern gleichzeitig zu suchen, außer durch das Replizieren von Inhalten zwischen Servern. Schließlich sind sie nicht dafür ausgelegt, verschiedene Kollektionen zu integrieren. Beispiele solcher Sammlungen umfassen Meta Data Services (www.msdn.microsoft.com/repository/), Enabler Blue (www.softlab.de), PR/OEE (www.platinum.com) und Rochade (www.viasoft.de).

Des weiteren gibt es web-basierte Suchmaschinen für allgemeine Anwendungen, beziehungsweise Meta-Suchmaschinen, wie zum Beispiel Hotbot und Meta-Crawler, welche eine Benutzeranfrage übernehmen und unverändert einer Mehrzahl von Suchmaschinen zuleiten. Hierbei ist üblicherweise die Anzahl der angesprochenen Suchmaschinen festgelegt, es findet keine Selektion bezüglich spezifischer Anfragen statt, und es existiert kein offenes Protokoll für die Kommunikation zwischen den Suchmaschinen.

Insgesamt wird die Suche durch diese Inkonsistenten bei den Suchwerkzeugen und der mangelnden Interoperabilität zwischen den verschiedenen Suchwerkzeugen und Objektsammlungen erschwert und wird in vielen Fällen nicht zu einem Erfolg führen.

Der vorliegenden Erfindung liegt daher die Aufgabe zu Grunde, Möglichkeiten bereitzustellen, mit denen ein Anwender mit einer einfachen Abfrage eine möglichst vollständige Suche nach den gewünschten Objekten anstoßen kann.

### Darstellung der Erfindung

Diese Aufgabe wird gelöst durch das Verfahren zum Auffinden von Objekten in einem Netzwerk gemäß dem unabhängigen Patentanspruch 1 sowie das Objektverwaltungssystem gemäß dem unabhängigen Patentanspruch 12. Weitere vorteilhafte Ausgestaltungen, Aspekte und Details der vorliegenden Erfindung ergeben sich aus den abhängigen Patentansprüchen, der Beschreibung und der beigefügten Zeichnung.

Die Erfindung ist zunächst gerichtet auf ein Verfahren zum Auffinden von Objekten in einem Netzwerk mit einer Mehrzahl von Objektservern, die bei einer Referenzinstanz angemeldet sind, die Informationen zu vorgegebenen Kriterien über die bei ihr angemeldeten Objektserver verwaltet, mit folgenden Schritten:
- Absenden einer Objektanfrage durch einen Klienten an einen ersten Objektserver, wobei die Anfrage ein Set von Suchkriterien zur Bestimmung geeigneter Objekte aufweist;
- Durchsuchen des ersten Objektservers nach zumindest einem ersten Teil der Suchkriterien genügenden Objekten;
- und/oder im Falle des Nichtfindens eines Objekts auf dem ersten Objektserver:
- Durchsuchen der Referenzinstanz nach weiteren zumindest einem zweiten Teil der Suchkriterien genügenden Objektservern und Durchsuchen der so aufgefundenen Objektserver nach zumindest dem ersten Teil der Suchkriterien genügenden Objekten; und
- falls zumindest ein den Suchkriterien genügendes Objekt auf einem der Objektserver gefunden worden ist: Zurücksenden von Lokalisierungsinformationen für die gefundenen Objekte an den Klienten.

Unter einem Objekt ist jegliche Datenentität, die in einer Datenverarbeitungsanlage gespeichert sein kann, zu verstehen, seien dies Softwareobjekte oder Bündel von Softwareobjekten, oder einfache Daten, wie Graphiken, Texte, Daten aus Datenbanken oder komplette Datenbanken. Zu einem auf einem Objekt-Server gespeicherten Objekt gehört ferner eine Beschreibung, die dieses Objekt charakterisiert. Diese charakterisierende Beschreibung gibt wiederum Kriterien an, nach denen das Objekt gesucht werden kann. Erfindungsgemäß ist es möglich, diese später als Suchkriterien formulierten Informationen im Objekt selbst oder in anderer Weise auf dem Objektserver abzulegen.

Ein Objektserver im Sinne der vorliegenden Erfindung ist eine Datenverarbeitungsanlage, welche eine Sammlung von Objekten beherbergt, sei dies in einem Unterverzeichnis oder in einer Datenbank oder in sonstiger Form.

Gegenüber dem Stand der Technik neu hinzugekommen und wesentlich für die Ausführung des erfindungsgemäßen Verfahrens ist die Referenzinstanz. Bei dieser melden sich Objektserver vorab an und übersenden an die Referenzinstanz Informationen zu vorgegebenen Kriterien über die jeweiligen Objektserver, welche angeben, welcher Art die vom Objektserver jeweils verwalteten Objekte sind. Unterschiedliche Objektserver können hierbei unterschiedliche Kriterien angeben, zum Beispiel kann eine Objektsammlung auf einem Objektserver nach dem Kriterium der verwendeten Technologie erstellt sein, da sich auf dem Objektserver beispielsweise lediglich Objekte, die zu einer bestimmten Basistechnologie kompatibel sind, befinden. Beispiele dafür sind unter Unix lauffähige Programme, .pdf-Dateien oder Software Komponenten, die dem COM+-Standard von Microsoft genügen.

Andere Kriterien können beispielsweise das Anwendungsgebiet (Software für Computersimulationen) oder Kosten der Softwareobjekte (Freeware, Shareware) sein. Wenn ein Anwender des erfindungsgemäßen Verfahrens ein Objekt suchen möchte, so formuliert er zunächst eine Anfrage, bei der er die von ihm gewünschten Kriterien, beispielsweise hinsichtlich einer verwendeten Technologie, eines Preises, eines Alters des Objekts etc. definiert und dem Klienten bekannt macht. Der Klient formuliert daraus eine formatierte Objektanfrage mit diesem Set von Suchkriterien, die er dem ersten Objektserver, der mit dem Klienten unmittelbar verbunden ist, übersendet. Der erste Objektserver wird daraufhin nach geeigneten Objekten durchsucht, wobei zumindest ein Teil der formulierten Suchkriterien, vorzugsweise jedoch alle Suchkriterien, verwendet wird.

Je nach Ausführung der Erfindung kann entweder gleichzeitig eine Suche in der Referenzinstanz gestartet werden, oder diese Suche wird erst dann aufgenommen, wenn das Verfahren auf dem ersten Objektserver kein geeignetes Objekt gefunden hat. Das Durchsuchen der Referenzinstanz erfolgt nach weiteren, zumindest einem zweiten Teil der Suchkriterien genügenden Objektservern. Bei dieser Suche kann lediglich ein Teil der gesamten Suchkriterien berücksichtigt werden, beispielsweise kann das Raster grober ausgerichtet sein (Basistechnologie, lauffähige Plattform), es kann jedoch auch das komplette Set der eingangs definierten Suchkriterien für die Suche auf der Referenzinstanz verwendet werden. Im folgenden werden dann im Fall des Auffindens geeigneter Objektserver diese Objektserver wiederum nach geeigneten Objekten an Hand des ersten Teils der Suchkriterien durchsucht. Falls ein geeignetes Objekt auf einem oder mehreren Objektservern gefunden worden ist, werden entsprechende Lokalisierungsinformationen an den Klienten zurückgesendet.

Das erfindungsgemäße Verfahren ermöglicht eine für den Anwender und das Klientenprogramm völlig transparente Suche in allen an dem Netzwerk angeschlossenen Objektservern. Die notwendigen Suchprotokolle und Mechanismen werden in den Objektservern und der Referenzinstanz implementiert, so daß der Klient gegenüber seiner Variante zum Zugriff auf lediglich den lokalen Objektserver unverändert bleiben kann.

Wie bereits erläutert, ist der Begriff des Objekts im Sinne der vorliegenden Erfindung sehr weit zu fassen. Ein besonders wichtiges Anwendungsgebiet ist allerdings das Auffinden von für Programmierprojekte geeigneter Software und Softwarekomponenten etc. Es wird daher insbesondere bevorzugt, daß die Objekte Softwarebündel sind. Ein Softwarebündel besteht in der Regel aus einem oder mehreren Softwareobjekten, als Binärcode oder als Quellcode in einer objektorientierten, prozeduralen oder sonstigen Programmiersprache für eine beliebige Hard- und Softwareplattform, sowie entsprechenden Beschreibungen der Softwareobjekte, an Hand derer der Programmierer diese zum Einsatz bringen kann.

In einer bevorzugten Ausführungsform der vorliegenden Erfindung wird nur dann, wenn kein den verwendeten Suchkriterien genügendes Objekt auf dem ersten Objektserver gefunden worden ist, die Referenzinstanz nach weiteren, zumindest dem zweiten Teil der Suchkriterien genügenden Objektservern durchsucht. Es ist allerdings auch möglich, die Suche nach Objekten unmittelbar auf die Referenzinstanz auszudehnen, um somit auch im Falle des Findens eines geeigneten Objekts auf dem ersten Objektserver einen vollständigen Überblick über alle möglicherweise geeigneten Objekte zu erhalten. Das Durchsuchen der Referenzinstanz kann vorzugsweise folgende Schritte aufweisen:
- Absenden einer Serveranfrage vom ersten Objektserver an die Referenzinstanz;
- Durchsuchen der Referenzinstanz nach zumindest einem zweiten Objektserver nach zumindest dem zweiten Teil der Suchkriterien durch Vergleich der verwendeten Suchkriterien mit den Kriterien in der Referenzinstanz; und
- Zurücksenden von Lokalisierungsinformationen für den zumindest einen gefundenen weiteren Objektserver an den anfragenden ersten Objektserver.

In dieser Ausführungsform der Erfindung sucht die Referenzinstanz nicht selbst nach konkreten Objekten auf Objektservern. Sie beschränkt sich vielmehr auf das Auffinden geeigneter Objektserver nach in ihr gespeicherten Kriterien.

Das Durchsuchen der weiteren Objektserver kann dann folgende Schritte aufweisen:
- Absenden einer Objektanfrage durch den ersten Objektserver an gefundene weitere Objektserver;
- Durchsuchen der weiteren Objektserver nach zumindest dem ersten Teil der Suchkriterien genügenden Objekten; und
- Zurücksenden von Lokalisierungsinformationen für die gefundenen Objekte an den ersten Objektserver.

Bei dieser Ausführungsform der Erfindung kümmert sich mithin der erste Objektserver um das weitere Eruieren von Objekten auf weiteren gefundenen Objektservern.

Es ist jedoch auch möglich, daß das Durchsuchen der weiteren Objektserver folgende Schritte aufweist:
- Zurücksenden von Lokalisierungsinformationen für den zumindest einen gefundenen weiteren Objektserver vom ersten Objektserver an den anfragenden Klienten;
- Absenden einer Objektanfrage durch den Klienten an den zumindest einen gefundenen weiteren Objektserver;
- Durchsuchen des zumindest einen weiteren Objektservers nach zumindest dem ersten Teil der Suchkriterien genügenden Objekten; und
- Zurücksenden von Lokalisierungsinformationen für die gefundenen Objekte von dem zumindest einen weiteren Objektserver an den Klienten.

In dieser Ausführungsform des erfindungsgemäßen Verfahrens fällt also dem Klienten die Rolle des Durchsuchens der weiteren gefundenen Objektserver zu. Zu diesem Zweck muß der Klient mit einer speziellen Erweiterung ausgestattet sein, die ihm das Umleiten der formulierten Anfrage gestattet.

Das Set von Suchkriterien kann vorzugsweise zumindest ein erstes Subset und ein zweites Subset umfassen, wobei das erste Subset Kriterien aufweist, die der Bestimmung des gesuchten Objekts dienen, während das zweite Subset Kriterien aufweist, die der Bestimmung eines geeigneten Objektservers dienen können, wobei die auf den Objektservern gesuchten Objekte zumindest den Kriterien des ersten Subsets genügen müssen und die in der Referenzinstanz gesuchten Objektserver zumindest den Kriterien des zweiten Subsets genügen müssen. Durch diese Trennung läßt sich die von einem Anwender formulierte Anfrage sauber in zwei Bereiche trennen, die unterschiedliche Verwendungszwecke haben.

Falls Lokalisierungsinformationen für das zumindest eine gefundene Objekt im Rahmen des erfindungsgemäßen Verfahrens zurückgesendet worden sind, kann das Verfahren den weiteren Schritt aufweisen: Herunterladen des zumindest einen gefundenen Objekts von dem zumindest einen Objektserver.

Bislang ist die Referenzinstanz als ein homogenes Gebilde betrachtet worden, quasi eine Black Box, die Anfragen entgegennimmt, weiterleitet und Ergebnisse zurücksendet. Es ist hierbei durchaus möglich, daß die Referenzinstanz eine einzelne Datenverarbeitungsanlage ist, die als Referenzserver der Anmeldung aller am Verfahren beteiligten Objektserver dient und somit eine zentrale Schaltinstanz darstellt.

Das Verfahren kann jedoch auch ausgedehnt werden, indem die Referenzinstanz als ein Netzwerk von Referenzservern ausgeführt ist, die jeweils Informationen über bei ihnen angemeldete Objektserver verwalten und Serveranfragen von bei ihnen angemeldeten Objektservern gegebenenfalls an zumindest einen Teil der anderen Referenzserver weiterleiten.

Die Weiterleitung an andere Referenzserver kann hierbei noch weiteren Kriterien unterliegen. So können sich beispielsweise die einzelnen Referenzserver über Eigenschaften der bei ihnen angemeldeten Objekte austauschen und ein gezieltes Weiterleiten von Serveranfragen nur an weitere Referenzserver vornehmen, bei denen die Aussicht auf Auffinden eines geeigneten Objektservers groß ist.

Auch eine hierarchische Anordnung der Referenzserver der Referenzinstanz ist hierbei vorstellbar.

Nicht limitierende Beispiele für Kriterien, mit denen nach Objekten gesucht wird, sind beispielsweise eine Objektkategorie, ein Anwendungsbereich, ein Qualitätsniveau, ein Vertrauensniveau, zumindest ein Stichwort, eine verwendete Technologie, vorhergehende Suchaktionen, ein Application Programming Interface, ein Speicherplatzbedarf, eine Abhängigkeit von einem bestimmten Betriebssystem, ein Kostenmaximum und ein Objektname.

Eine Objektkategorie kann beispielsweise Softwarebündel, Graphiken, etc. sein. Ein Anwendungsbereich gibt die mögliche Verwendung des Objekts, beispielsweise für Ingenieur-, Architektur- oder sonstige Zwecke vor. Ein Qualitätsniveau kann sich beispielsweise nach der Fehlerfreiheit oder der Funktionskomplexität der Objekte bestimmen. Ein Vertrauensniveau kann beispielsweise angeben, wie zuverlässig das gefundene Objekt aus der angegebenen Quelle stammt oder mit welcher Sicherheit es die gegebene Funktionalität erfüllen kann. Die verwendete Technologie gibt beispielsweise Dateiformate oder Schnittstellendefinitionen oder Binärformate von ausführbaren Objekten an.

Vorhergehende Suchen können ebenfalls als Kriterium eine neue Suche einschränken, beispielsweise indem der Anwender vorab festlegen kann, auf welchen konkreten Objektserver noch nach dem zu findenden Objekt gesucht werden soll, beispielsweise weil sich diese bei vorigen Suchen als treffsicher herausgestellt haben.

Auch ein Kostenmaximum kann vorgebbar sein, beispielsweise bei kostensensitiven Projekten. Schließlich ist es auch möglich, nach einem konkreten Objektnamen zu suchen, sofern dieser bereits bekannt ist und der Anwender weiß, daß das gesuchte Objekt seine Anforderungen erfüllen wird.

Welche Suchkriterien abgefragt werden, und damit, wie die Objekt-Anfrage insgesamt formuliert ist, kann entweder im Programmcode oder der Konfiguration des Klienten festgelegt sein, oder durch den Objektserver bestimmt werden. Im ersten Fall verfügt der Klient beispielsweise über eine Eingabemaske mit Beschreibungen der vorab festgelegten Kriterien und dazu gehörigen Eingabefeldern, welche der Anwender bei seiner Suche ausfüllen kann.

Im anderen Fall können aus Kriteriums-Informationen, die vom Objektserver an den Klienten gesandt werden, dynamisch eine oder mehrere Eingabemasken erzeugt werden, in denen die vom Objektserver festgelegten Kriterien als Eingabefelder erscheinen. Auch eine sukzessive, interaktive Abfrage von Kriterien durch den Objektserver, die vom Klienten in entsprechende Anwender-Abfragen umgewandelt werden, ist alternativ vorstellbar. Die Weiterreichung abzufragender Kriterien muß sich dabei im übrigen nicht auf den lokalen Objektserver beschränken. Vielmehr ist es ebenfalls möglich, daß das Set von Kriterien zentral in der Referenzinstanz festgelegt wird und an die lokalen Objektserver weitergereicht wird, welche sie wiederum den Klienten weitergeben.

Die Erfindung ist weiterhin gerichtet auf ein Objektverwaltungssystem zur Bereitstellung von Objekten, das aufweist:
- zumindest zwei Objektserver mit einem Pool von Objekten, die ein Set von Kriterien aufweisen;
- einer mit den Objektservern verbundenen Referenzinstanz mit einem Speicher mit Informationen zu Kriterien über die auf dem Objektserver liegenden Objekte; und
- zumindest einen mit einem Objektserver verbundenen Klienten mit Sendemitteln zum Absenden einer Objektanfrage mit einem Set von Kriterien nach einem Objekt, das den Kriterien genügt; und
- mit Empfangsmitteln zum Empfangen von Lokalisierungsinformationen zu gefundenen Objekten.

Alles bezüglich des erfindungsgemäßen Verfahrens gesagte gilt gleichermaßen für das erfindungsgemäße Objektverwaltungssystem, so daß auf das obige Bezug genommen und vollinhaltlich verwiesen wird.

Der Speicher zum Speichern von Kriterien über die Objekte kann hierbei sämtliche zu einem bestimmten Objekt verfügbaren Informationen aufnehmen oder nur ein Subset der zugehörigen Kriterien.

Die Objektserver können weiter aufweisen: Anfragemittel zum Formulieren einer Serveranfrage an die Referenzinstanz mit zumindest einem Teil der Kriterien einer Objektanfrage zum Auffinden von Objektservern, die diesem Teil der Kriterien genügen.

Die Referenzinstanz wiederum kann Mittel aufweisen zum Empfangen von Objektanfragen von den Objektservern und zum Zurücksenden von Lokalisierungsinformationen zu gefundenen Objektservern und/oder zu gefundenen Objekten. Die konkrete Ausgestaltung hängt hier auch davon ab, ob die Referenzinstanz die Suche selbst durchführt oder diese an die Objektserver oder den Klienten delegiert. Das erfindungsgemäße Objektverwaltungssystem kann weiter dadurch gekennzeichnet sein, daß die Referenzinstanz aufweist: Mittel zum Auffinden von Objektservern in ihrem Speicher, die den Kriterien einer Serveranfrage genügen.

Wie bereits bezüglich des Verfahrens ausgeführt, kann die Referenzinstanz ein Netzwerk von Referenzservern aufweisen, die jeweils einen Speicher mit Informationen über bei ihnen angemeldete Objektserver und Mittel zur Weiterleitung von Serveranfragen an weitere Referenzserver in dem Netzwerk aufweisen.

Insbesondere kann das Netzwerk eine hierarchische Anordnung von Referenzservern aufweisen, wobei die Mittel zur Weiterleitung die Serveranfragen an übergeordnete und/oder untergeordnete Referenzserver weiterleiten können oder weiterleiten.

Die Objektserver können auf verschiedenen Datenverarbeitungsanlagen implementiert sein, die über ein Netzwerk mit der Referenzinstanz verbunden sind. Auf diese Weise kann sich ein extrem distributiertes System ergeben, bei dem ein Netzwerk von Referenzservern mit ebenfalls verteilten Objektservern verbunden ist. Ein Beispiel für ein solches Netzwerk könnte auch das Internet darstellen. Es ist allerdings auch möglich, Referenzserver und Objektserver auf einer Datenverarbeitungsanlage zu koppeln.

Auch ist es möglich, daß der zumindest eine Klient und der Objektserver, mit dem er verbunden ist, auf verschiedenen Datenverarbeitungsanlagen implementiert sind, die ebenfalls über ein Netzwerk miteinander verbunden sind. In der Tat wird dies sogar der prototypische Fall einer Implementation des erfindungsgemäßen Objektverwaltungssystems ein, bei dem Klienten beispielsweise Web-Browser sein können, die über einen http-Protokollverkehr Kontakt mit Objektservern aufnehmen und ihre Anfragen mit üblichen Mechanismen abschicken. Objektserver und Referenzserver sowie Referenzserver untereinander können wiederum mit üblichen IP-Protokollen miteinander kommunizieren, beispielsweise über zu diesem Zweck reservierte Ports von TCP oder UDP. Für das Objektverwaltungssystem, können die Kriterien der Anfragen ausgewählt sein aus einer Objektkategorie, einem Anwendungsbereich, einem Qualitätsniveau, einem Vertrauensniveau, zumindest einem Stichwort, einer verwendeten Technologie, vorhergehenden Suchen, einem Application Programming Interface, einem Speicherplatzbedarf, einer Abhängigkeit von einem bestimmten Betriebssystem, einem Kostenmaximum und einem Objektnamen, wie oben erläutert.

### Kurze Beschreibung der Zeichnung

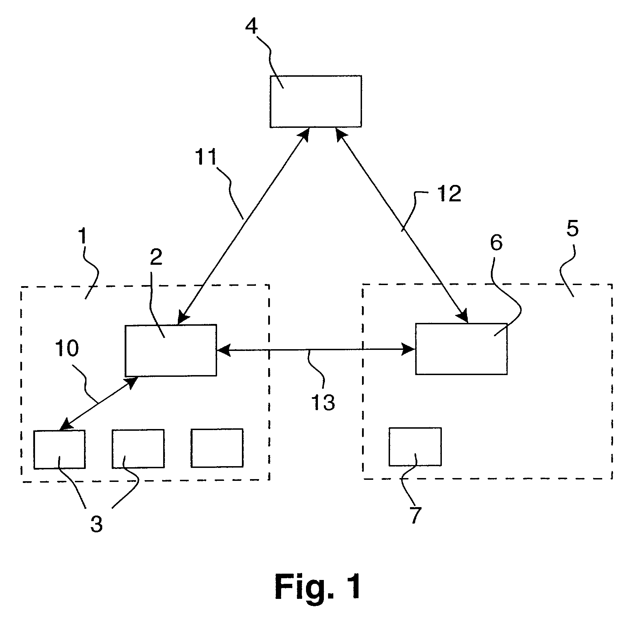

Figur 1 zeigt schematisch die an der Erfindung beteiligten Elemente sowie ihre Verbindungen.

### Wege zur Ausführung der Erfindung

Der Anwender gibt eine Suchanfrage, beispielsweise bestehend aus Schlüsselwörtern, Kategorien, Qualitätslevel, verwendeter Technologie etc. ein.

Zunächst wird eine Suche auf seinem lokalen Objektserver, das heißt der Objektsammlung seiner Organisationseinheit, durchgeführt. Entweder automatisch oder auf Benutzeranforderung wird die Anfrage dann auf abgelegene Sammlungen auf anderen Objektservern ausgedehnt. Diese ausgedehnte Suche wird vom lokalen ersten Objektserver durchgeführt und ist für den Anwender völlig transparent. Der lokale Objektserver kommuniziert mit den entfernten Objektservern über offene plattform- und technologieunabhängige Transportprotokolle und Formate, wie beispielsweise XML, SOAP, IIOP, LDAP. Die Auswertung einer solchen Anfrage kann über verschiedene Niveaus erfolgen, das heißt, daß ein entfernter Objektserver ebenfalls die Suche zu weiteren entfernten Objektservern ausdehnen kann.

Ein Protokoll auf Applikationsniveau stellt sicher, daß keine Endlosschleifen auftreten. Um seine Suche auf andere Objektserver auszuweiten, kann der lokale Objektserver eine Liste entfernter Objektserver, beziehungsweise Sammlungen und ihrer Lokalisierungsinformationen, vorhalten. Die erfindungsgemäße Referenzinstanz befindet sich in diesem Fall unmittelbar im Objektserver und wird von diesem auch verwaltet. Während dieser Ansatz im kleineren Maßstab durchführbar ist, ist er nicht gut skalierbar. Daher wird im Rahmen der Erfindung vorgeschlagen, eine zentrale Referenzinstanz zu verwenden, nämlich einen einzelnen Server oder ein Netzwerk von Servern, bei dem sich jeder Objektserver an- beziehungsweise abmeldet. Die zentrale Referenzinstanz stellt dann intern Sets mit Referenzen, beispielsweise URLs zur Verfügung, die auf geeignete entfernte Objektserver bezüglich einer bestimmten Anfrage verweisen. Offene plattformunabhängige und technologieunabhängige Transportprotokolle, wie oben beschrieben, werden zur An- und Abmeldung von Objektservern zur Beschreibung der Gebiete und der Inhalte der Objektserver, zur Beschreibung der Objekt- und Serveranfragen sowie auch zur Beschreibung von Zufriedenheitslevels vorheriger Transaktionen mit einem bestimmten Objektserver verwendet.

Figur 1 zeigt beispielhaft die miteinander vernetzten Elemente der Erfindung. Die Organisationseinheit 1 weist einen lokalen Objektserver 2 auf, welcher sich über Weg 11 bei der Referenzinstanz 4 anmeldet. Er gibt eine Selbstbeschreibung ab, welche die Informationen enthält, welche Technologien oder nach anderen Kriterien geordneten Objekte er zur Verfügung stellt.

In einem Beispiel sei angenommen, daß der Objektserver Komponenten bereitstellt für die Unterwerkautomatisierung, die in Microsoft COM-Technologie von einer CMM-Level-4 Organisation entwickelt worden sind. Ein Entwickler in der Organisationseinheit 1 sucht nach einer bestimmten Softwarekomponente. Dies kann beispielsweise ein Einzelliniendiagrammeditor sein. Er formuliert die Anfrage am Klienten 3, welcher über Weg 10 mit dem lokalen Objektserver 2 verbunden ist. Die Suchanfrage wird weiter verfeinert durch das Kriterium, daß die gesuchte Komponente zum Anwendungsgebiet der Unterwerkautomatisierung gehört.

Auf dem lokalen Objektserver 2 wird nach dem Objekt an Hand der vom Entwickler vorgegebenen Kriterien gesucht. Falls keine geeigneten Komponenten im lokalen Objektserver 2 gefunden werden, dehnt dieser die Suche automatisch auf andere Objektserver aus.

Zunächst werden jedoch Lokalisierungsinformationen, das heißt Links, auf geeignete Objektserver benötigt. Zu diesem Zweck formuliert der lokale Objektserver 2 eine Serveranfrage zur Referenzinstanz 4, die über Verbindung 11 der Referenzinstanz 4 zugesandt wird. Die Serveranfrage muß nicht notwendigerweise die exakte Komponentenanfrageformulierung des Anwenders enthalten, sondern kann Beschränkungen zur Spezifizierung von Objektservern, welche für die weitere Suche geeignet wären, angeben. Es verwendet mithin gegebenenfalls nur ein Subset der gesamten Suchkriterien.

Die Referenzinstanz 4 durchsucht ihre eigene Objektserverliste oder sonstige Datenbank nach weiteren geeigneten Objektservern. Ein solcher kann beispielsweise Objektserver 6 in Organisationseinheit 5 sein, zu der ebenfalls der weitere Klient 7 gehört. Dieser Objektserver 6 hat sich über Verbindung 12 mit Angaben über die Anwendungsgebiete, die Qualität und die verwendete Technologie der auf ihm gespeicherten Objekte angemeldet. Ergibt die Suche auf der Referenzinstanz 4, daß der Objektserver 6 möglicherweise geeignete Objekte enthält, wird über Verbindung 11 eine entsprechende Lokalisierungsinformation an den lokalen Objektserver 2 zurückgesendet. Nach Erhalt einer solchen Referenz (Lokalisierungsinformation) durch die Referenzinstanz 4, kann nunmehr die Objektanfrage direkt zum Objektserver 6 der Organisationseinheit 5 geschickt werden, woraufhin das Ergebnis der Suche über Verbindung 13 zurückgesendet und dieses dann dem Anwender über Verbindung 10 zugestellt wird.

Es versteht sich, daß alle Einheiten, die an dem erfindungsgemäßen Netzwerk teilnehmen, standardisierten Schnittstellen und Protokollen wie XML, SOAP, IIOP, oder LDAP entsprechen müssen, welche die Kommunikation zwischen ihnen in der gleichen Weise ermöglichen. Dies bedeutet beispielsweise auch, daß Suchanfragen in der gleichen Weise interpretiert werden müssen etc.

Im Zuge der fortschreitenden Rationalisierung im Bereich der Datenverarbeitung wird ein immer größerer Schwerpunkt darauf gelegt, Objekte, welche bereits existieren, wiederverwenden zu können. Geeignete Mechanismen zur Auffindung solcher Objekte, die "ready made" sind und sofort von Programmierern, Graphikdesignern, Architekten etc. eingesetzt werden können, gewinnen daher zunehmend an Bedeutung. Selbst innerorganisatorisch kann sich eine solche Suche auf Grund der räumlich verteilten Struktur von Großunternehmungen als schwierig gestalten. Die Suche im Internet mit seiner großen Zahl von möglichen Servern für wiederverwendbare Objekte erschwert eine erfolgreiche Suche weiter. Hier kann die vorliegende Erfindung Abhilfe schaffen, indem sie für den Anwender transparent die Suche nach Objekten in einem Netzwerk beliebig und flexibel, das heißt ohne zentrale Koordinationsinstanz, ausweitbar macht.

### Bezugszeichenliste

- 1: Lokale Organisationseinheit
- 2: Erster Objekt-Server
- 3: Lokaler Klient
- 4: Referenzinstanz
- 5: weitere Organisationseinheit
- 6: Entfernter Objekt-Server
- 7: Klient der weiteren Organisationseinheit
- 10: Verbindung Klient zum Objektserver
- 11: Verbindung Objektserver zur Referenzinstanz
- 12: Verbindung Referenzinstanz zu weiterem Objekt-Server
- 13: Verbindung der Objekt-Server

## Patentansprüche

1. Verfahren zum Auffinden von Objekten in einem Netzwerk mit einer Mehrzahl von Objekt-Servern (2, 6), die bei einer Referenz-Instanz (4) angemeldet sind, die Informationen zu vorgegebenen Kriterien über die bei ihr angemeldeten Objekt-Server (2, 6) verwaltet, mit folgenden Schritten:
- Absenden einer Objekt-Anfrage durch einen Klienten (3) an einen ersten Objekt-Server (2), wobei die Anfrage ein Set von Suchkriterien zur Bestimmung geeigneter Objekte aufweist;
- Durchsuchen des ersten Objekt-Servers (2) nach zumindest einem ersten Teil der Suchkriterien genügenden Objekten und/oder im Falle des Nichtfindens eines Objekts auf dem ersten Objekt-Server (2);;
- Durchsuchen der Referenz-Instanz (4) nach weiteren, zumindest einem zweiten Teil der Suchkriterien genügenden Objekt-Servern (6) und Durchsuchen der so aufgefundenen Objekt-Server (6) nach zumindest dem ersten Teil der Suchkriterien genügenden Objekten; und
falls zumindest ein den Suchkriterien genügendes Objekt auf einem der Objekt-Server (2, 6) gefunden worden ist:
- Zurücksenden von Lokalisierungsinformationen für die gefundenen Objekte an den Klienten (3).

2. Verfahren nach Anspruch 1, **dadurch gekennzeichnet, daß** die Objekte Software-Bündel sind.

3. Verfahren nach Anspruch 1 oder 2, **dadurch gekennzeichnet, daß** nur dann, wenn kein den verwendeten Suchkriterien genügendes Objekt auf dem ersten Objekt-Server (2) gefunden worden ist; die Referenz-Instanz (4) nach weiteren, zumindest dem zweiten Teil der Suchkriterien genügenden Objekt-Servern (6) durchsucht wird.

4. Verfahren nach einem der Ansprüche 1 bis 3, **dadurch gekennzeichnet, daß** das Durchsuchen der Referenz-Instanz (4) folgende Schritte aufweist:
- Absenden einer Server-Anfrage vom ersten Objekt-Server (2) an die Referenz-Instanz (4);
- Durchsuchen der Referenz-Instanz (4) nach zumindest einem zweiten Objekt-Server (6) nach zumindest dem zweiten Teil der Suchkriterien durch Vergleich der verwendeten Suckriterien mit den Kriterien in der Referenz-Instanz (4), und
- Zurücksenden von Lokalisierungsinformationen für den zumindest einen gefundenen weiteren Objekt-Server (6) an den anfragenden ersten Objekt-Server (2).

5. Verfahren nach einem der Ansprüche 1 bis 4, **dadurch gekennzeichnet, daß** das Durchsuchen der weiteren Objekt-Server (6) folgende Schritte aufweist:
- Absenden einer Objekt-Anfrage durch den ersten Objekt-Server (2) an gefundene weitere Objekt-Server (6);
- Durchsuchen der weiteren Objekt-Server (6) nach zumindest dem ersten Teil der Suchkriterien genügenden Objekten; und
- Zurücksenden von Lokalisierungsinformationen für die gefundenen Objekte an den ersten Objekt-Server (2).

6. Verfahren nach einem der Ansprüche 1 bis 4, **dadurch gekennzeichnet, daß** das Durchsuchen der weiteren Objekt-Server (6) folgende Schritte aufweist:
- Zurücksenden von Lokalisierungsinformationen für den zumindest einen gefundenen weiteren Objekt-Server (6) vom ersten Objekt-Server (2) an den anfragenden Klienten (3);
- Absenden einer Objekt-Anfrage durch den Klienten (3) an den zumindest einen gefundenen weiteren Objekt-Server (6);
- Durchsuchen des zumindest einen weiteren Objekt-Servers (6) nach zumindest dem ersten Teil der Suchkriterien genügenden Objekten; und
- Zurücksenden von Lokalisierungsinformationen für die gefundenen Objekte von dem zumindest einen weiteren Objekt-Server (6) an den Klienten (3).

7. Verfahren nach einem der Ansprüche 1 bis 6, **dadurch gekennzeichnet, daß** das Set von Suchkriterien zumindest ein erstes Subset und ein zweites Subset umfasst, wobei das erste Subset Kriterien aufweist, die der Bestimmung des gesuchten Objekts dienen, während das zweite Subset Kriterien aufweist, die der Bestimmung eines geeigneten Objekt-Servers (2, 6) dienen können;
wobei die auf den Objekt-Servern (2, 6) gesuchten Objekte zumindest den Kriterien des ersten Subsets genügen müssen;
und die in der Referenz-Instanz gesuchten Objekt-Server (6) zumindest den Kriterien des zweiten Subsets genügen müssen.

8. Verfahren nach einem der Ansprüche 1 bis 7, **dadurch gekennzeichnet, daß** das Verfahren den weiteren Schritt aufweist, falls Lokalisierungsinformationen für das zumindest eine gefundene Objekt zurückgesendet worden sind:
- Herunterladen des zumindest einen gefundenen Objekts von dem zumindest einen Objekt-Server (2, 6).

9. Verfahren nach einem der Ansprüche 1 bis 8, **dadurch gekennzeichnet, daß** die Referenz-Instanz (4) ein Netzwerk von Referenz-Servern aufweist, die jeweils Informationen über bei ihnen angemeldete Objekt-Server (2, 6) verwalten und Server-Anfragen von bei ihnen angemeldeten Objekt-Servern (2, 6) an zumindest einen Teil der anderen Referenz-Server weiterleiten.

10. Verfahren nach einem der Ansprüche 1 bis 9, **dadurch gekennzeichnet, daß** die Kriterien ausgewählt sind aus einer Objektkategorie, einem Anwendungsbereich, einem Qualitätsniveau, einem Vertrauensniveau, zumindest einem Stichwort, einer verwendeten Technologie, vorhergehenden Suchen, einem application programming interface, einem Speicherplatzbedarf, einer Abhängigkeit von einem bestimmten Betriebssytem, einem Kostenmaximum, und einem Objektnamen.

11. Verfahren nach einem der Ansprüche 1 bis 10, **dadurch gekennzeichnet, daß** das Set von Suchkriterien durch den Objekt-Server bestimmt wird.

12. Objekt-Verwaltungssystem zur Bereitstellung von Objekten, aufweisend
zumindest zwei Objekt-Server (2, 6) mit einem Pool von Objekten, die ein Set von Kriterien aufweisen;
einer mit den Objekt-Servern (2, 6) verbundene Referenz-Instanz (4) mit einem Speicher mit Informationen zu Kriterien über die auf den Objekt-Servern (2, 6) liegenden Objekte; und zumindest einen mit einem Objekt-Server (2) verbundenen Klienten mit Sende-Mitteln zum Absenden einer Objekt-Anfrage mit einem Set von Kriterien nach einem Objekt, das den Kriterien genügt, und mit Empfangsmitteln zum Empfangen von Lokalisierungsinformationen zu gefundenen Objekten.

13. Objekt-Verwaltungssystem nach Anspruch 12, **dadurch gekennzeichnet, daß** die Objekt-Server (2) aufweisen Anfrage-Mittel zum Formulieren einer Server-Anfrage an die Referenz-Instanz mit zumindest einem Teil der Kriterien einer Objekt-Anfrage zum Auffinden von Objekt-Servern (6), die diesem Teil der Kriterien genügen.

14. Objekt-Verwaltungssystem nach Anspruch 12 oder 13, **dadurch gekennzeichnet, daß** die Referenz-Instanz (4) aufweist Mittel zum Empfangen von Objekt-Anfragen von den Objekt-Servern (2) und zum Zurücksenden von Lokalisierungsinformationen zu gefundenen Objekt-Servern (6) und/oder gefundenen Objekten.

15. Objekt-Verwaltungssystem nach einem der Ansprüche 12 bis 14, **dadurch gekennzeichnet, daß** die Referenz-Instanz (4) aufweist Mittel zum Auffinden von Objekt-Servern (6) in ihrem Speicher, die den Kriterien einer Server-Anfrage genügen.

16. Objekt-Verwaltungssystem nach einem der Ansprüche 12 bis 15, **dadurch gekennzeichnet, daß** die Referenz-Instanz (4) ein Netzwerk von Referenz-Servern aufweist, die jeweils einen Speicher mit Informationen über bei ihnen angemeldete Objekt-Server (2, 6) und Mittel zur Weiterleitung von Server-Anfragen an weitere Referenz-Server in dem Netzwerk aufweisen.

17. Objekt-Verwaltungssystem nach Anspruch 16, **dadruch gekennzeichnet, daß** das Netzwerk eine hierarchische Anordnung von Referenz-Servern aufweist, wobei die Mittel zur Weiterleitung die Server-Anfragen an übergeordnete und/oder untergeordnete Referenz-Server weiterleiten können oder weiterleiten.

18. Objekt-Verwaltungssystem nach einem der Ansprüche 12 bis 17, **dadurch gekennzeichnet, daß** die Objekt-Server (2, 6) auf verschiedenen Datenverarbeitungsanlage implementiert sind, die über ein Netzwerk mit der Referenz-Instanz (4) verbunden ist.

19. Objekt-Verwaltungssystem nach einem der Ansprüche 12 bis 18, **dadurch gekennzeichnet, daß** der zumindest eine Klient (3, 7) und der Objekt-Server (2, 6), mit dem er verbunden ist, auf verschiedenen Datenverarbeitungsanlagen implementiert sind, die über ein Netzwerk miteinander verbunden sind.

20. Objekt-Verwaltungssystem nach einem der Ansprüche 12 bis 19, **dadurch gekennzeichnet, daß** die Kriterien ausgewählt sind aus einer Objektkategorie, einem Anwendungsbereich, einem Qualitätsniveau, einem Vertrauensniveau, zumindest einem Stichwort, einer verwendeten Technologie, vorhergehenden Suchen, einem application programming interface, einem Speicherplatzbedarf, einer Abhängigkeit von einem bestimmten Betriebssytem, einem Kostenmaximum und einem Objektnamen.
